# EUROPÄISCHE PATENTSCHRIFT

(11) **EP 0 778 194 B1**
(45) Veröffentlichungstag und Bekanntmachung des Hinweises auf die Patenterteilung: **23.05.2001**
(21) Anmeldenummer: 96810759.9
(22) Anmeldetag: 11.11.1996
(51) Int. Cl.: B62D 31/02, B61D 17/04, B62D 29/00

(54) **Fahrzeug, insbesondere Strassen- oder Schienenfahrzeug, mit einem Skelett**
Vehicle, especially road or railway vehicle, comprising a skeleton-frame
Véhicule, spécialement véhicule routier ou ferroviaire, comportant une ossature

(30) Priorität: 07.12.1995 DE 19545591
(43) Veröffentlichungstag der Anmeldung: 11.06.1997
(73) Patentinhaber: Alusuisse Technology & Management AG, 8212 Neuhausen am Rheinfall (CH)
(72) Erfinder: Waldeck, Klaus-Dieter, 8954 Geroldswil (CH)

(56) Entgegenhaltungen:
- EP-A- 0 472 785
- DE-A- 3 424 690
- US-A- 3 926 100
- ZEITSCHRIFT FUR EISENBAHNWESEN UND VERKEHRSTECHNIK;GLASERS ANNALEN, Bd. 96, Nr. 10, Oktober 1972, Seiten 319-320, XP002028464 DUBA: "die neue aluminium-grossstrangpressprofil-bauweise"
- REVUE DE L'ALUMINIUM, Nr. 495, Mai 1980, Seiten 225-244, XP002028465 BOUTONNET: "l'aluminium dans la construction du materiel ferroviaire"

## Beschreibung

Die Erfindung betrifft ein Fahrzeug, insbesondere ein Schienen- oder Strassenfahrzueg wie Reisebus oder dergl., mit einem Skelett, das vertikale Profile enthaltende Seitenwandteile und diese verbindende plattenartige Boden- und Dachelemente umfasst, wobei beidseits des Dachelements jeweils ein Dachgurt vorgesehen ist und der Dachgurt als nach unten offenes Rinnenprofil ausgebildet und das Dachelement unter Bildung eines nach oben offenen Dachraumes dem bodenwärtigen Ende des innenliegenden Rinnenschenkels zugeordnet ist.

Fahrzeugaufbauten üblicher Bauart bieten ein mit ihrer Außenkontur bündig verlaufendes Strukturgerippe an, auf welchem Verkleidungselemente und die Verglasung der Fensterbereiche befestigt werden. Die Dachschale wird nach der Blechmontage isoliert und von unten her mit Plattenelementen abgedeckt. Im seitlichen Dachbereich werden Kabel, Luftleitungen und Anbauteile wie Linienwähler, Türantriebe und Lüftungen untergebracht und dann ihrerseits mit einer für Wartungsarbeiten zu öffnenden Verkleidung versehen.

Bei modernen Niederflurbussen müssen neben den erwähnten Anbauteilen auch noch -- ursprünglich im Fahrgestell untergebracht gewesene -- Geräte wie Luftbehälter oder Leitungen im Dachbereich angeordnet werden. Die hierdurch entstehenden Platzprobleme und Luftgeräuschimmissionen sind nur mit erheblichem Aufwand zu lösen bzw. zu beseitigen.

Die EP-O 628 469 Al der Anmelderin beschreibt einen Fahrgestellrahmen bei -- mit Achsen, Motor, Getriebe und weiteren Antriebsteilen ausgerüsteten -- Straßenfahrzeugen, wie Lastkraftwagen oder Bussen. Auf dem Fahrgestellrahmen wird eine Gerippestruktur festgelegt und dann zu einem Passagier- oder Laderaum ausgebaut. Die Seitenwandteile der Gerippestruktur weisen Vertikalsäulen und diese verbindende horizontale Kastenprofile als Traggerippe für Verkleidungsplatten auf. Das Bodenelement ist eine mehrschichtige Bodenplatte, die durch -- einerseits an Randbereichen der Bodenplatte selbst sowie anderseits an jenen Seitenwandsäulen festgelegte -- Konsolen gehalten wird.

Die vorbekannte Gerippestruktur bietet auf beiden Seiten durchgehende Dachprofile oder Dachgurte an, zwischen denen sich das -- gegebenenfalls unterhalb der Dachschale einen Innendachteil enthaltende -- Dachelement befindet. Der Innendachteil kann Deckenkonsolen und eine Innendachplatte aufweisen, die in seitlichem Versatz zu den Seitenwandsäulen steht und an diese mittels der Konsolen an die Seitenwandsäulen angeschlossen ist.

Nach FR-PS 2 635 064 werden wabenartig ausgestaltete Böden, Zwischenböden und Decken mit über die ganze Wagenlänge längslaufenden gegenseitig verschweißten Mehrkammerprofilen zu Eisenbahnwagenstrukturen verarbeitet. Ein Austausch von beschädigten Teilen wäre, wenn überhaupt, nur durch abschnittweises Heraustrennen und Neueinschweißen von Ersatzteilen möglich.

Ein Fahrzeug mit einem Skelett, entsprechend den wesentlichen Merkmalen des Oberbegriffes des unabhängigen Anspruchs 1, ist bekannt aus: ZEITSCHRIFT FÜR EISENBAHNWESEN UND VERKEHRSTECHNIK; GLASERS ANNALEN, Bd. 96, Nr. 10, Oktober 1972, Seiten 319-320, "Die neue Aluminium-GROSS Strangpressprofil-Bauweise".

In Kenntnis dieses Standes der Technik hat sich der Erfinder das Ziel gesetzt, die Herstellung eingangs erwähnter Fahrzeuge weitergehend zu vereinfachen und vor allem eine Modulbauweise anzubieten, welche den Zusammenbau vorgefertigter Elemente zu Fahrzeugen unterschiedlicher Bemessung ebenso erlaubt wie den einfachen Austausch einzelner Elemente.

Zur Lösung dieser Aufgabe führt die Lehre des unabhängigen Patentanspruches; die Unteransprüche geben günstige Weiterbildungen an.

Der Dachgurt ist als nach unten offenes Rinnenprofil ausgebildet und das Dachelement unter Bildung eines nach oben offenen Dachraumes dem bodenwärtigen Ende des innenliegenden Rinnenschenkels zugeordnet. So entstehen im Gebrauchszustand des Fahrzeuges eine Innendachstruktur sowie jener Dachraum zur Aufnahme von Gasflaschen, Druckluftbehältern od. dgl. Zubehör.

Erfindungsgemass sind die Vertikalprofile oder Rinnenschenkel des strukturell tragend ausgebildeten Dachgurtes durch in Abstand zueinander verlaufende Querstäbe oder Supportplatten verbunden. Die Querstäbe oder Supportplatten sind zweckmassig einends am bodenwärtigen Ende des innenliegenden Rinnenschenkels festgelegt. Die Querstäbe oder Supportplatten sind zweckmassig andernends an vertikalen Profilen bzw. Seitenwandsäulen festgelegt. Letzteren stehen vorteilhafterweise am innenliegenden Rinnenschenkel des Dachgurtes befestigte Haltestangen gegenüber, die ihrerseits mit dem bodenwärtigen Ende des innenliegenden Rinnenschenkels sowie jeweils einer Supportplatte einen Verbindungsbereich bestimmten.

Bevorzugt enthält das Seitenwandteil oder das Seitenwandmodul im Bereich des Dachgurtes wenigstens einen Luftführungs- und/oder einem Leitungskanal. Zumindest ein Luftführungs- sowie ein Leitungskanal sind durch die Supportplatten des Dachgurtes bestimmt; wenn diese in liegender V-Form gestaltet sind, bestimmen deren Schenkel den unteren der Kanäle, die von horizontalen Verbindungsplatten begrenzt werden.

Zur zusätzlichen Stabilisierung sind die inneren Rinnenschenkel zweier Seitenwandteile oberhalb des Dachelements durch Querelemente - beispielsweise durch Lochstege -verbunden. Das Dachelement sowie die Querelemente können zudem von einer feuchtigkeits- und schmutzabweisenden Abdeckfläche aus leichtem Werkstoff überspannt werden.

Als günstig hat es sich erwiesen, die Rinnenschenkel des Dachgurtes aus jeweils einem Strangpreßprofil zu fertigen, aus dessen Fläche hinterschnittene Einschubrinnen mit öffnungsschlitzen als Anschlußorgane herausgeformt sind. So wird etwa das untere Ende des inneren Rinnenschenkels von einer Einschubrinne mit bodenwärtigem Öffnungsschlitz gebildet, an welche die Sitzhaltestangen festgelegt zu werden vermögen. Zudem steht vom bodenwärtigen Ende des inneren Rinnenschenkels ein Horizontalsteg als Auflage für die Dachplatte ab.

Nach einem weiteren Merkmal der Erfindung wird das obere Ende des Rinnenschenkels von einem Hohlprofilabschnitt gebildet, und die Hohlprofilabschnitte beider Rinnenschenkel werden durch ein zur Dachplatte in Abstand paralleles Firstprofil zu jenem selbstragenden Rinnenprofil ergänzt.

Im unteren Bereich des Seitenwandteils ist ein schmales -ebenfalls stranggepreßtes -- Kastenprofil als Sockelgurt vorhanden, welcher bodenwärts zur Längsachse des Fahrzeuges hin in einem Winkel einwärts geneigt ist. An den Sockelgurt sind erfindungsgemäß sowohl die Seitenwandsäulen als auch die Bodenplatte angeschlossen, letztere bevorzugt durch eine Kaltverbindung.

Insgesamt ergibt sich ein aus Modulen -- in seiner Breite und Länge variabel -- montierbares Fahrzeug mit einem in normgerechter Höhe umlaufenden Sockelgurt als Crashzone und den folgenden --- teilweise bereits erörterten -- Vorzügen:
* durch die tieferliegende Dachplatte, die mit der Unterkante des Dachgurtes bündig ist, wird eine Innendachstruktur im Fertigzustand möglich mit darüber liegendem Raum für Gasflaschen, Luftbehälter od.dgl.;
* die tragende Quer-Struktur, also die sogenannte Supportplatte, oberhalb der Dachplatte führt zu erheblich mehr Quersteifigkeit als bei normalen Dachspriegeln üblich, sie kann für Anbauteilebefestigung genutzt werden;
* der U-förmige, nach unten offene und strukturell tragende Dachgurt dient gleichzeitig als Luftkanal und Raum für wartungsbedürftige Geräte sowie als Kabelkanal; er ist zudem von unten zugänglich;
* die Dachplatte aus Verbundwerkstoff ergibt ein einbaufertiges Großbauteil hoher Eigensteifigkeit mit integrierter Dachisolation;
* der von den vertikalen Profilen oder Seitenwandsäulen hinterschnittene Dachgurt besitzt große Quersteifigkeit für Überrollansprüche;
* die den inneren Rinnenschenkel nach unten verlängernden und am Dachgurt innen und unten befestigten Haltestangen erfüllen eine eindeutige statische Funktion; Einlagen in der Dachplatte zur Stabilisierung können entfallen;
* der Fahrzeugfirst kann mit einem leichten - - wegnehmbaren -- Schmutzabweiser problemlos abgedeckt werden und muß deshalb selbst nicht wasserdicht sein; der Schmutzabweiser kann bei Trolleybussen aus isolierendem Material gefertigt sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf einen aus modulen Teilen zusammengesetzten Bus, wobei die einzelnen Teile der besseren Übersicht halber zusätzlich in Abständen zum Bus skizziert sind;
- Fig. 2:: einen vergrößerten Teilschnitt durch Fig. 1 nach deren Linie II-II;
- Fig. 3:: einen der Fig. 2 entsprechenden weiteren Teilschnitt durch den Kleinbus;
- Fig. 4:: ein vergrößertes Detail der Fig. 3 in Schrägsicht;
- Fig. 5:: das Detail der Fig. 4 in anderer Ausgestaltung;
- Fig. 6:: drei gegenüber Fig. 3 vergrößerte Einzelprofile in räumlicher Zuordnung zueinander gemäß Einbaulage;
- Fig. 7:: ein vergrößertes Sockelprofil der Fig. 3;
- Fig. 8:: ein weiteres Einbauprofil der Fig. 3.

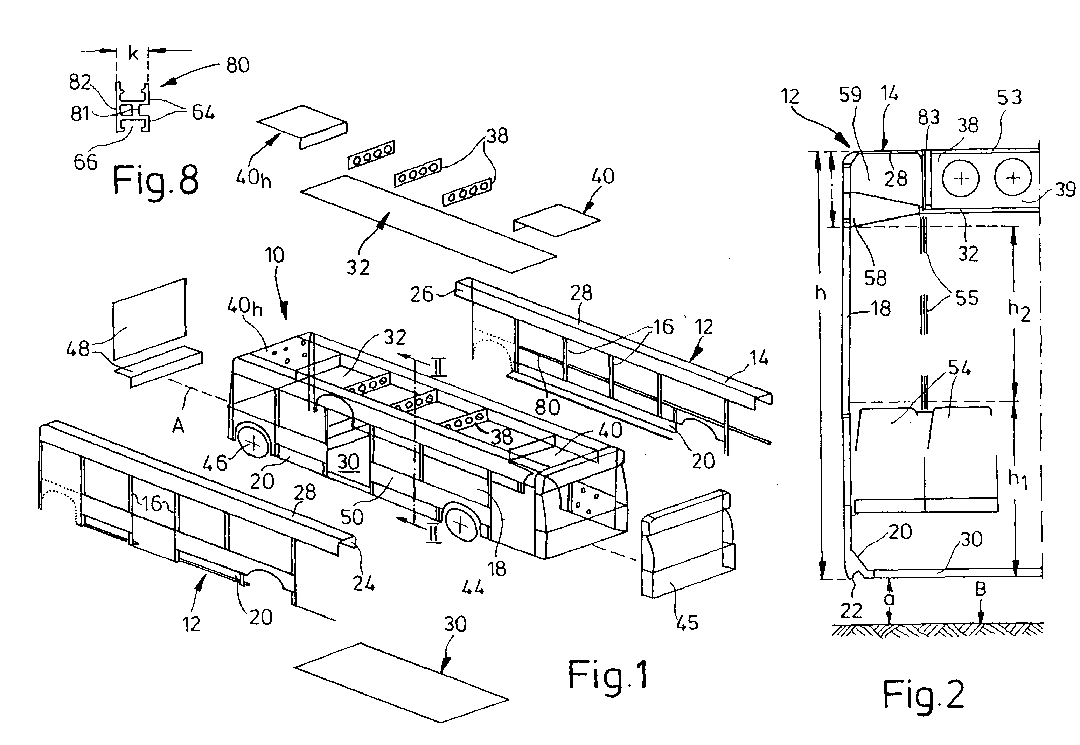

Ein Bus 10 weist gemäß Fig. 1 beidseits seiner Längsachse A jeweils ein Seitenwandmodul oder -teile 12 aus jeweils einem strukturell tragenden, sich rinnenartig abwärts öffnenden Dachgurt 14, davon ausgehenden Seitenwandsäulen 16 - - mit sich zwischen ihnen befindlichen großflächigen Seitenscheiben 18 -- und einem Sockelgurt 20 auf. Dessen von einem abragenden Steg gebildete Unterkante 22 verläuft in Einbaulage in einem Abstand a von beispielsweise 260 mm über dem Fahrgrund B; der Sockelgurt 20 einer Höhe e von hier etwa 460 mm befindet sich damit in einem durch ECE-Richtlinien (ECE/R 42 bzw. ECE/R 93) definierten Bereich, welcher der üblichen Höhe von Stoßstangen an Personenkraftwagen bzw. vorderem Unterfahrschutz an Lastkraftwagen entspricht.

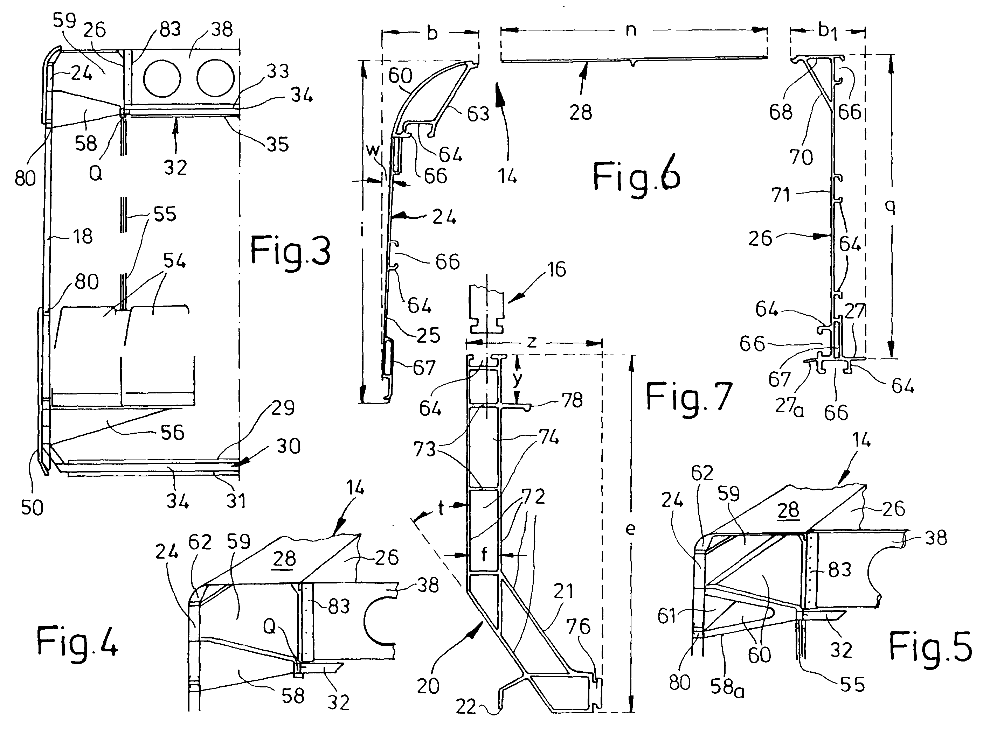

Die Gesamthöhe h von hier etwa 2570 mm des Seitenwandmoduls 12 setzt sich zusammen aus einer inneren Sockelhöhe h₁ von 1020 mm, einer Fensterhöhe h₂ von 1120 mm sowie einer Dachgurthöhe i von hier etwa 430 mm. Die Breite des Querschnittes von Rinnenprofil oder Dachgurt 14 umfaßt gemäß Fig. 6 die äußere Breite b von beispielsweise 120 mm eines in Einbaulage äußeren Rinnenschenkels bzw. außenliegenden Vertikalprofils 24, die Breite b₁ eines inneren Rinnenschenkels bzw. Vertikalprofils 26 sowie die Länge n eines diese verbindenden -- einen Teil des Daches bildenden --Firstprofils 28.

Die beiden parallelen Seitenwandmodule 12 sind im Bereich der Sockelgurte 20 durch eine mehrschichtige Verbundplatte als Bodenscheibe 30 und an den Dachgurten 14 durch eine ebenfalls mehrschichtige Dachplatte 32 verbunden. Letztere besteht aus einem trittfesten oberen Deckpanel 33, einer Isolierschicht 34 und einer Innenverkleidung 35.

Die Dachplatte 32 liegt einem unteren Horizontalsteg 27 des inneren Vertikalprofils 26 auf, befindet sich also in einem mittleren Abstand q von etwa 400 mm unterhalb der Oberfläche jenes Firstprofils 28. Die Dachplatte 32 queren mehrere Lochstege 38, die zwischen dem Paar von inneren Vertikalprofilen 26 verlaufen. Heck- und frontwärts ist jeweils eine die Dachplatte 32 fortsetzende, längsschnittlich L-förmige Endplatte 40, 40ₕ aus glasfaserverstärktem Kunststoff vorgesehen.

In Fig. 1 sind mit 44 eine Vorderachse, mit 45 eine Frontverkleidung 45 sowie mit 48 eine zweiteilige Heckverkleidung nahe der Hinterachse 46 bezeichnet. Front- und Heckverkleidung 45, 48 werden ergänzt durch äußere Flankenplatten 50 im Sockelbereich und seitliche Obergurtabdeckungen, beispielsweise in Form der Rinnenschenkel 24. Über die Lochstege 38 kann zur Abdeckung des nach oben offenen Dachraumes 39 noch eine gegebenenfalls flexible Abdeckfläche 53, etwa eine Plane, gespannt sein (Fig. 2).

Die Flankenplatten 50 können die Sockelgurte 20 überspannen oder oberhalb von diesen ansetzen. Im Bereich der Flankenplatten 50 sind in Fig. 3 Cantilever-Sitze 54 an Sitzhaltestangen 55 oder auf Tragkonsolen 56 zu erkennen; letztere sind einends am Sockelgurt 20 festgelegt und verjüngen sich von diesen ab aufwärts zum Fahrgastinnenraum hin, um ausreichende Bodenfreiheit für einen Reinigungsvorgang zu ermöglichen.

Die Seitenwandsäulen 16 sind gemäß Fig. 2 bis 4 mittels laschenartiger Supportplatten 58 an das benachbarte innere Vertikalprofil 26 angeschlossen. Die Supportplatten 58 sind von flügelartiger Seitenansicht und verjüngen sich zu dem vom inneren Vertikalprofil 26 und der Dachplatte 32 bestimmten Verbindungsbereich Q. In letzterem können -- falls vorhanden -- auch jene Haltestangen 55 für die Cantilever-Sitze 54 enden. Oberhalb dieser Supportplatten 58 verläuft ein Luftführungskanal 59.

Bei der Ausgestaltung nach Fig. 5 sind die Supportplatten 58a jeweils als liegendes V-Profil ausgebildet, an dessen beide Schenkel horizontal Verbindungsplatten 60 anschließen; diese begrenzen einen -- unterhalb jenes Luftführugskanals 59 verlaufenden -- vom Fahrgastinnenraum zugänglichen Leitungskanal 61.

Wie Fig. 6 verdeutlicht, ist der untere Bereich 25 des äußeren Vertikalprofils 24 in Einbaulage in einem Neigungswinkel w geringfügig gegen die Vertikale nach innen geneigt und nahe des Anschlusses des Firstprofils 28 zu diesem hin gekrümmt. Das so entstehende Bogenstück 62 wird durch eine Sehnenwand 63 sowie ein diese mit dem Bogenstück 62 verbindendes Einschubprofilteil 64 zu einem Hohlprofilabschnitt ergänzt. Einschubprofilteil 64 besteht aus einem Rechteckprofil mit abwärts gerichtetem Öffnungsschlitz 66 und hinterschnittenem Innenraum.

Dem oben beschriebenen Hohlprofilabschnitt des äußeren Vertikalprofils 24 steht ein entsprechender Hohlprofilabschnitt des inneren Vertikalprofils 26 gegenüber; letzteres ist nach oben hin mit einem zum Firstprofil 28 gerichteten Firstschenkel 68 versehen, von dem ein geneigter Spreizsteg 70 zum vertikalen Abschnitt 71 dieses Vertikalprofils 26 läuft.

An die dachwärtige Außenseite des inneren Vertikalsteges 26 sind drei jener Einschubprofilteile 64 mit hier jeweils horizontal verlaufendem Öffnungsschlitz 66 angeformt. An den untersten dieser Einschubprofilteile 64 schließt ein versteifender Rechteckprofilabschnitt 67 an; ein solcher ist auch am unteren Ende des äußeren Vertikalprofils 24 zu erkennen. Dem Rechteckprofilabschnitt 67 des inneren Vertikalprofils 26 sind zwei weitere -- zueinander querschnittlich rechtwinkelig stehende -- Einschubprofilteile 64 angeformt. Vom tiefsten Einschubprofilteil 64 ragt seitlich der erwähnte Horizontalsteg 27 für die Dachplatte 32 ab und diesem gegenüber -- zur anderen Seite hin -- eine Rippe 27ₐ für die Supportplatte 58,58ₐ. Dieses Einschubprofilteil 64 öffnet sich bodenwärts und dient dem Anschluß der erwähnten Haltestangen 55.

Der Sockelgurt 20 ist gemäß Fig. 7 ein Kastenprofil aus zwei in Abstand f zueinander parallelen Außenwänden 72, die mit Querstegen 73 Kammern 74 begrenzen. Nach oben hin bietet der Sockelgurt 20 einen Einschubprofilteil 64 zum Anschluß der Seitenwandsäulen 16 an, bodenwärts ist er in einem Winkel t einwärts geneigt - der so entstehende einwärts geneigte Bodenabschnitt ist mit 21 kenntlich gemacht. Dieser bestimmt mit seinem -- dem Bodenanschluß dienenden -hinterschnittenen Kupplungsende 76 die Einbaubreite z des Sockelgurtes 20 von hier etwa 180 mm. In einem Abstand y von der Oberfläche des nach oben weisenden Einschubprofilteil 64 ragt an der Innenseite des Sockelgurtes 20 eine Tragrippe 78 als Stütze für die erwähnten Cantilever-Sitze 54 ab.

Zwischen den Seitenwandsäulen 16 verlaufen zur Stabilisierung der Konstruktion horizontale Versteifungsstege 80. Gemäß Fig. 8 handelt es sich dabei jeweils um ein Hohlprofil einer Breite k von 40 mm aus zwei gegenläufig angeordneten und durch eine Mittelrippe 81 sowie eine Außenrippe 82 verbundenen Einschubprofilteilen 64.

Das Seitenwandmodul 12 wird mit den Flankenplatten 50, den Rinnenschenkeln 24, den Seitenscheiben 18, nicht dargestellten Innenverkleidungen, Leitungen, Kabeln, Kanälen dafür sowie mit Türen, Sitzen 54 und Haltestangen 55 komplett vormontiert; die wählbare Breite der durch Kaltverbinden -- also ohne thermische Einflüsse -- angeschlossenen Bodenscheibe 30 und Deckplatte 32 bestimmt die Breite des entstehenden Busses 10; die Breite des Seitenwandmoduls 12 bleibt stets konstant. Auch die an Lochlaschen 83 des Dachgurtes 14 festgelegte Dach-Baugruppe ist mit den erforderlichen Aggregaten wie Drucklufttanks, LNG-Druckflaschen od.dgl. Zuführleitungen und Dachlucken vormontiert.

Die Bodenscheibe 30 ist ebenfalls als vorgefertigter Einbauteil mit trittfestem Deckblech 29, Isolierschicht 34 und korrosionsfestem Unterboden 31 ausgeführt.

## Patentansprüche

1. Fahrzeug, insbesondere Strassen- oder Schienenfahrzeug wie Reisebus oder dergl., mit einem Skelett, das vertikale Profile enthaltende Seitenwandteile (12) und diese verbindende plattenartige Boden- und Dachelemente (32) umfasst, wobei beidseits des Dachelements (32) jeweils ein Dachgurt (14) vorgesehen ist, und der Dachgurt (14) als nach unten offenes Rinnenprofil ausgebildet und das Dachelement (32) unter Bildung eines nach oben offenen Dachraumes (39) dem bodenwärtigen Ende des innenliegenden Rinnenschenkels (26) zugeordnet ist,
dadurch gekennzeichnet, dass
die Rinnenschenkel (24, 26) des strukturell tragend ausgebildeten Dachgurtes (14) durch in Abstand zueinander verlaufende Querstäbe oder Supportplatten (58, 58a) verbunden sind.

2. Fahrzeug nach Anspruch 1, dadurch gekennzeichnet, dass die Querstäbe oder Supportplatten (58, 58a) einends am bodenwärtigen Ende des innenliegenden Rinnenschenkels (26) festgelegt sind.

3. Fahrzeug nach Anspruch 1, dadurch gekennzeichnet, daß die Supportplatten (58, 58ₐ) mit einem Ende an den vertikalen Profilen oder Seitenwandsäulen (16) des Seitenwandteils (12) festliegen.

4. Fahrzeug nach einem der Ansprüche 1 bis 3, dadurch gekennzeichnet, daß vertikalen Profilen oder Seitenwandsäulen (16) des Seitenwandteils (12) am innenliegenden Rinnenschenkel (26) des Dachgurtes (14) an diesem befestigte Haltestangen (55) gegenüberstehen.

5. Fahrzeug nach Anspruch 4, dadurch gekennzeichnet, daß die Haltestangen (55) mit dem bodenwärtigen Ende des innenliegenden Rinnenschenkels (26) sowie jeweils einer Supportplatte (58,58ₐ) einen Verbindungsbereich (Q) bestimmen.

6. Fahrzeug nach einem der Ansprüche 1 bis 5, dadurch gekennzeichnet, daß das Seitenwandteil (12) als Seitenwandmodul im Bereich des Dachgurtes (14) wenigstens einen Luftführungs- und/oder einen Leitungskanal (59,61) enthält.

7. Fahrzeug nach wenigstens einem der Ansprüche 1 bis 6, dadurch gekennzeichnet, daß zumindest ein Luftführungs- und ein Leitungskanal (59,61) durch die Supportplatten (58ₐ) des Dachgurtes (14) bestimmt sind (Fig. 5).

8. Fahrzeug nach Anspruch 7, dadurch gekennzeichnet, dass die Supportplatten (58, 58a) in liegender V-Form gestaltet sind und deren Schenkel den unteren der Kanäle bestimmen und die Kanäle von horizontalen Verbindungsplatten (60) begrenzt sind.

9. Fahrzeug nach wenigstens einem der Ansprüche 1 bis 8, dadurch gekennzeichnet, daß die inneren Rinnenschenkel (26) zweier paralleler Seitenwandteile (12) oberhalb des Dachelements (32) durch Querelemente (38), bevorzugt durch Lochstege, verbunden sind.

10. Fahrzeug nach wenigstens einem der Ansprüche 1 bis 9, gekennzeichnet durch eine mehrschichtige Platte als Dachelement (32) und/oder als Bodenplatte (30).

11. Fahrzeug nach wenigstens einem der Ansprüche 1 bis 10, dadurch gekennzeichnet, daß das Dachelement (32) sowie die Querelemente (38) mittels Laschen (83) durch eine Kaltverbindung an den inneren Rinnenschenkel (26) angeschlossen sind.

12. Fahrzeug nach wenigstens einem der Ansprüche 1 bis 11, dadurch gekennzeichnet, daß das Dachelement (32) sowie die Querelemente (38) von einer feuchtigkeits- und schmutzabweisenden Abdeckfläche (53) aus leichtem Werkstoff überspannt sind.

13. Fahrzeug nach wenigstens einem der Ansprüche 1 bis 12, dadurch gekennzeichnet, daß die Rinnenschenkel (24,26) des Dachgurtes (14) aus jeweils einem Strangpreßprofil bestehen, aus dessen Fläche hinterschnittene Einschubrinnen (64) mit Öffnungsschlitzen (66) herausgeformt sind.

14. Fahrzeug nach wenigstens einem der Ansprüche 1 bis 13, dadurch gekennzeichnet, daß das untere Ende des inneren Rinnenschenkels (26) von einer Einschubrinne (64) mit bodenwärtigem Öffnungsschlitz (66) gebildet ist.

15. Fahrzeug nach wenigstens einem der Ansprüche 1 bis 14, dadurch gekennzeichnet, daß vom bodenwärtigen Ende des inneren Rinnenschenkels (26) ein Horizontalsteg (27) als Auflage für die Dachplatte (32) abragt.

16. Fahrzeug nach wenigstens einem der Ansprüche 1 bis 15, dadurch gekennzeichnet, daß das obere Ende des Rinnenschenkels (24,26) von einem Hohlprofilabschnitt gebildet ist und die Hohlprofilabschnitte (62 bis 64;68,70) beider Rinnenschenkel durch ein zur Dachplatte (32) in Abstand (q) paralleles Firstprofil (28) zum Rinnenprofil ergänzt sind.

17. Fahrzeug nach wenigstens einem der Ansprüche 1 bis 16, dadurch gekennzeichnet, daß der untere Bereich des Seitenwandteils (12) von einem schmalen Kastenprofil als Sockelgurt (20) gebildet ist, welcher bodenwärts zur Längsachse (A) des Fahrzeuges (10) hin in einem Winkel (t) einwärts geneigt ist.

18. Fahrzeug nach wenigstens einem der Ansprüche 1 bis 16, dadurch gekennzeichnet, daß an den Sockelgurt (20) sowohl die Seitenwandsäulen (16) als auch die Bodenplatte (30) angeschlossen sind.

19. Fahrzeug nach Anspruch 17 oder 18, dadurch gekennzeichnet, daß die Bodenplatte (30) durch eine Kaltverbindung an den Sockelgurt (20) angeschlossen ist.

20. Fahrzeug nach wenigstens einem der Ansprüche 1 bis 19, dadurch gekennzeichnet, daß an das aus zwei Seitenwandteilen (12), der Boden- und der Dachplatte (30 bzw. 32) bestehende Skelett eine Front- und/oder eine Heckverkleidung (45 bzw. 48) angeschlossen sind/ist.

## Claims

1. Vehicle, in particular road or rail vehicle, such as a coach or the like, comprising a skeleton frame including side-wall parts (12) containing vertical sections and panel-type floor and roof elements (32) joining them together, respective roof booms (14) being provided on either side of the roof element (32), the roof boom (14) being in the form of a channel section open at the bottom and the roof element (32) being associated with the downwardly directed end of the inner channel flange (26) so as to form a roof space (39) open at the top, characterised in that the channel flanges (24, 26) of the load-bearing roof boom (14) are joined together by transverse bars or supporting plates (58, 58ₐ) extending at a distance from one another.

2. Vehicle according to claim 1, characterised in that the transverse bars or supporting plates (58, 58ₐ) are fixed at one end to the downwardly directed end of the inner channel flange (26).

3. Vehicle according to claim 1, characterised in that the supporting plates (58, 58ₐ) are fixed at one end to the vertical sections or side-wall columns (16) of the side-wall part (12).

4. Vehicle according to one of claims 1 to 3, characterised in that vertical sections or side-wall columns (16) of the side-wall part (12) are situated opposite support poles (55) fixed to the inner channel flange (26) of the roof boom (14).

5. Vehicle according to claim 4, characterised in that the support poles (55) define a joining region (Q) together with the downwardly directed end of the inner channel flange (26) and respective supporting plates (58, 58ₐ).

6. Vehicle according to one of claims 1 to 5, characterised in that the side-wall part (12) serving as a side-wall module is provided in the region of the roof boom (14) with at least one air duct and/or a service duct (59, 61).

7. Vehicle according to at least one of claims 1 to 6, characterised in that at least one air duct and one service duct (59, 61) are defined by the supporting plates (58ₐ) of the roof boom (14) (Fig. 5).

8. Vehicle according to claim 7, characterised in that the supporting plates (58, 58ₐ) are designed in the shape of a V lying on its side, its legs defining the lower ducts, and the ducts are delimited by horizontal joining plates (60).

9. Vehicle according to at least one of claims 1 to 8, characterised in that the inner channel flanges (26) of two parallel side-wall parts (12) are joined together above the roof element (32) by transverse elements (38), preferably by perforated webs.

10. Vehicle according to at least one of claims 1 to 9, characterised by a laminated panel serving as the roof element (32) and/or as the floor panel (30).

11. Vehicle according to at least one of claims 1 to 10, characterised in that the roof element (32) and the transverse elements (38) are connected by a cold joint to the inner channel flanges (26) by means of straps (83).

12. Vehicle according to at least one of claims 1 to 11, characterised in that the roof element (32) and the transverse elements (38) are covered by a moisture-repellent and dirt-repellent cover (53) made of lightweight material.

13. Vehicle according to at least one of claims 1 to 12, characterised in that the channel flanges (24, 26) of the roof boom (14) consist of respective extruded sections the surfaces of which are provided with undercut plug-in channels (64) with opening slots (66).

14. Vehicle according to at least one of claims 1 to 13, characterised in that the lower end of the inner channel flange (26) is formed by a plug-in channel (64) with a downwardly directed opening slot (66).

15. Vehicle according to at least one of claims 1 to 14, characterised in that a horizontal web (27) serving as a support for the roof panel (32) projects from the downwardly directed end of the inner channel flange (26).

16. Vehicle according to at least one of claims 1 to 15, characterised in that the upper end of the channel flange (24, 26) is formed by a hollow-section part and the hollow-section parts (62 to 64; 68, 70) of both channel flanges are extended by a ridge section (28) parallel to the roof panel (32) at a distance (q) therefrom in order to form the channel section.

17. Vehicle according to at least one of claims 1 to 16, characterised in that the lower region of the side-wall part (12) is formed by a narrow box section serving as a bottom boom (20) which is inclined inwards at an angle (t) towards the bottom relative to the longitudinal axis (A) of the vehicle (10).

18. Vehicle according to at least one of claims 1 to 16, characterised in that both the side-wall columns (16) and the floor panel (30) are connected to the bottom boom (20).

19. Vehicle according to claim 17 or claim 18, characterised in that the floor panel (30) is connected to the bottom boom (20) by a cold joint.

20. Vehicle according to at least one of claims 1 to 19, characterised in that front and/or rear panelling (45 and 48 respectively) is connected to the skeleton frame consisting of two side-wall parts (12), the floor panel and the roof panel (30 and 32 respectively).

## Revendications

1. Véhicule, en particulier véhicule routier ou ferroviaire comme un autocar ou similaire, comprenant une ossature qui comporte des parties de parois latérales (12) contenant des profilés verticaux, et des éléments de plancher et de toiture (32) en forme de plaques qui relient ces parties latérales, dans lequel il est prévu une ceinture de toiture (14) respective des deux côtés de l'élément de toiture (32), et la ceinture de toiture (14) est réalisée sous la forme d'un profilé en goulotte ouvert vers le bas, et l'élément de toiture (32) est associé à l'extrémité, tournée vers le plancher, de l'aile intérieure (26) de la goulotte en formant un volume de toiture (39) ouvert vers le haut,
caractérisé en ce que les ailes (24, 26) de goulotte de la ceinture de toiture (14), réalisée porteuse de par sa structure, sont reliées par des barres transversales ou par des plaques de support (58, 58a) qui s'étendent à distance les unes des autres.

2. Véhicule selon la revendication 1, caractérisé en ce que les barres transversales ou les plaques de support (58, 58a) sont fixées à une extrémité à l'extrémité côté plancher de l'aile intérieure (26) de la goulotte.

3. Véhicule selon la revendication 1, caractérisé en ce que les plaques de support (58, 58a) sont fixées par une extrémité sur les profilés verticaux ou sur les colonnes de parois latérales (16) de la partie de paroi latérale (12).

4. Véhicule selon l'une des revendications 1 à 3, caractérisé en ce que des profilés verticaux ou des colonnes de parois latérales (16) de la partie de paroi latérale (12) sur l'aile intérieure (26) de la ceinture de toiture (14) sont à l'opposé de tiges de maintien (55) fixées sur celle-ci.

5. Véhicule selon la revendication 4, caractérisé en ce que les tiges de maintien (55) déterminent, avec l'extrémité côté plancher de l'aile intérieure (26) de la goulotte ainsi qu'avec une plaque de support respective (58, 58a), une zone de liaison (Q).

6. Véhicule selon l'une des revendications 1 à 5, caractérisé en ce que la partie de paroi latérale (12), réalisée sous la forme d'un module de paroi latérale, contient dans la région de la ceinture de toiture (14) au moins un canal de guidage d'air et/ou un canal à câbles (59, 61).

7. Véhicule selon l'une au moins des revendications 1 à 6, caractérisé en ce que les plaques de support (58a) de la ceinture de toiture (14) définissent au moins un canal de guidage d'air et un canal à câbles (59, 61) (figure 5).

8. Véhicule selon à la revendication 7, caractérisé en ce que les plaques de support (58, 58a) sont réalisées sous une forme en V couché, et leurs bras définissent le canal inférieur, et en ce que les canaux sont délimités par des plaques de liaison horizontales (60).

9. Véhicule selon l'une au moins des revendications 1 à 8, caractérisé en ce que les ailes intérieures (26) de goulotte de deux parties de parois latérales parallèles (12) sont reliées au-dessus de l'élément de toiture (32) par des éléments transversaux (32), de préférence par des barrettes à trous.

10. Véhicule selon l'une au moins des revendications 1 à 9, caractérisé en ce que l'élément de toiture (32) et/ou la plaque de plancher (30) sont constitués par une plaque multicouche.

11. Véhicule selon l'une au moins des revendications 1 à 10, caractérisé en ce que l'élément de toiture (32) ainsi que les éléments transversaux (38) sont reliés à l'aile intérieure (26) de goulotte au moyen de pattes (83) par une liaison à froid.

12. Véhicule selon l'une au moins des revendications 1 à 11, caractérisé en ce que les éléments de toiture (32) ainsi que les éléments transversaux (38) sont recouverts d'une surface de couverture (53) anti-humidité et anti-saletés en matériau léger.

13. Véhicule selon l'une au moins des revendications 1 à 12, caractérisé en ce que les ailes de goulotte (24, 26) de la ceinture de toiture (14) sont respectivement constituées par un profilé extrudé, tel que des rainures d'introduction (64) en contre-dépouille avec fente d'ouverture (66) sont formées à partir de la surface dudit profilé.

14. Véhicule selon l'une au moins des revendications 1 à 13, caractérisé en ce que l'extrémité inférieure de l'aile intérieure de goulotte (26) est formée par une rainure d'introduction (64) avec fente d'ouverture (66) côté plancher.

15. Véhicule selon l'une au moins des revendications 1 à 14, caractérisé en ce qu'une barrette horizontale (27) dépasse de l'extrémité côté plancher de l'aile intérieure de goulotte (26) à titre d'appui pour la plaque de toiture (32).

16. Véhicule selon l'une au moins des revendications 1 à 15, caractérisé en ce que l'extrémité supérieure de l'aile de goulotte (24, 26) est formée par un tronçon de profilé creux, et en ce que les tronçons de profilé creux (62 à 64 ; 68, 70) des deux ailes de goulotte sont complétés par un profilé de faîte (28) parallèle à la plaque de toiture (32) à une distance (q) pour former un profilé à goulotte.

17. Véhicule selon l'une au moins des revendications 1 à 16, caractérisé en ce que la zone inférieure de la partie de paroi latérale (12) est formée par un profilé étroit en caisson à titre de ceinture de base (20), celle-ci étant inclinée vers l'intérieur du côté plancher sous un angle (t) en direction de l'axe longitudinal (A) du véhicule (10).

18. Véhicule selon l'une au moins des revendications 1 à 16, caractérisé en ce que les colonnes de parois latérales (16) ainsi que la plaque de plancher (30) sont raccordées à la ceinture de base (20).

19. Véhicule selon l'une ou l'autre des revendications 17 et 18, caractérisé en ce que la plaque de plancher (30) est raccordée à la ceinture de base (20) par une liaison à froid.

20. Véhicule selon l'une au moins des revendications 1 à 19, caractérisé en ce qu'un habillage frontal et/ou un habillage arrière (45 ; 48) est/sont raccordé(s) à l'ossature constituée par les deux parties de parois latérales (12), par la plaque de plancher (30) et par la plaque de toiture (32).
